# EUROPÄISCHE PATENTSCHRIFT

(11) **EP 1 345 019 B1**
(45) Veröffentlichungstag und Bekanntmachung des Hinweises auf die Patenterteilung: **03.12.2008**
(21) Anmeldenummer: 03003376.5
(22) Anmeldetag: 14.02.2003
(51) Int. Cl.: G01K 7/18

(54) **Temperatursensor**
Temperature sensor
Capteur de température

(30) Priorität: 12.03.2002 DE 10210772
(43) Veröffentlichungstag der Anmeldung: 17.09.2003
(73) Patentinhaber: HERAEUS SENSOR TECHNOLOGY GMBH, 63450 Hanau (DE)
(72) Erfinder: Wienand, Karlheinz, Dr., 63741 Aschaffenburg (DE); Loose, Thomas, 63589 Linsengericht (DE)
(74) Vertreter: Kühn, Hans-Christian

(56) Entgegenhaltungen:
- RU-C- 2 069 324
- US-A- 6 118 166
- B.M. LAIRSON E.A.: "Epitaxial Pt(001), Pt(110), and Pt(111) films on MgO(001), MgO(110), MgO(111), and Al2O3(0001)" APPLIED PHYSICS LETTERS., Bd. 61, Nr. 12, 21. September 1992 (1992-09-21), Seiten 1390-1392, XP000307804 AMERICAN INSTITUTE OF PHYSICS. NEW YORK., US ISSN: 0003-6951

## Beschreibung

Die Erfindung betrifft einen Temperatursensor mit einem temperatur-sensitiven Element auf einer Oberfläche eines einkristallinen Substrats, wobei das temperatur-sensitive Element durch einen Platindünnfilmwiderstand gebildet ist. Die Erfindung betrifft weiterhin ein Verfahren zur Herstellung eines solchen Temperatursensors sowie eine Verwendung.

Temperatursensoren mit einem Platindünnfilmwiderstand auf einem einkristallinen Substrat sind bekannt. So beschreibt die RU 2069324 eine Temperaturmesseinrichtung mit einem dielektrischen Substrat und einem darauf in Form eines Mäanders aufgebrachten Dünnfilmwiderstand aus Nickel oder Platin. Zwischen der Platinschicht und dem Substrat ist eine Haftvermittlerschicht aus Titannitrid angeordnet. Als dielektrisches Substrat ist beispielsweise Saphir offenbart.

Die US 6,229,121 B1 offenbart einen Mikroschalter mit einem Bimetall-Schaltkontakt, welcher auf einer epitaktischen Schicht ein mäanderförmiges Heizelement und ein Temperatursensitives Element wie zum Beispiel einen Platindünnfilmwiderstand aufweist.

Die WO 87/05146 beschreibt einen Temperatursensor mit einem isolierenden Substrat, beispielsweise aus Saphir. Als Temperatursensor ist ein Platindünnfilmwiderstand vorgesehen, der mit einer Abdeckschicht geschützt ist.

Die DE 32 05 704 offenbart eine Einrichtung zur Beurteilung des Raumklimas mit einem Temperaturfühlelement, das einen Platindünnfilmwiderstand in Form eines Mäanders auf einem Substrat aus beispielsweise Saphir aufweist.

Die US 4,378,489 beschreibt eine Messanordnung mit einem Platindünnfilmwiderstand und einem Heizelement auf einem Saphir-Träger.

Um eine weitere Geometrieverkleinerung von Temperatursensoren mit Platindünnfilmwiderständen erreichen zu können, müssen auf immer kleineren Substratflächen immer dünnere und längere Leiterbahnen erzeugt werden. Die bislang hergestellten kristallinen Platindünnfilmwiderstände für Temperatursensoren sind technisch ab ca. einer Leiterbahnbreite von > 10µm verwendbar, da die Leitungselektronen bei einer geringeren Breite an den Platin-Korngrenzen streuen und der Temperaturkoeffizient α des elektrischen Widerstandes des Platins verloren geht. Außerdem können bei der Strukturierung des kristallinen Platindünnfilmwiderstandes, beispielsweise durch Ätzen, Fehlstellen in der Leiterbahn auftreten, die auf die Platinkristallite beziehungsweise deren Form, Größe und Ausrichtung zurückzuführen sind.

Es stellt sich daher das Problem, einen Temperatursensor mit einem Platindünnfilmwiderstand als temperatur-sensitivem Element bereitzustellen, bei welchem eine Verringerung der Leiterbahnbreite und Leiterbahnabstände des Platindünnfilmwiderstandes auf < 10µm möglich ist. Außerdem soll ein geeignetes Verfahren zur Herstellung eines solchen Temperatursensors angegeben werden.

Das Problem wird für den Temperatursensor dadurch gelöst, dass der Platindünnfilmwiderstand als Epitaxieschicht ausgebildet ist. Unter einer Epitaxieschicht wird eine durch Epitaxie auf einem einkristallinen Substrat erzeugte Einkristallschicht verstanden. Wird der Platindünnfilmwiderstand als Epitaxieschicht ausgebildet, so ist dieser aufgrund seiner Einkristallinität sehr gut ätzbar und es können fehlerfrei Leiterbahnbreiten und -abstände von < 10µm hergestellt werden. Der Temperaturkoeffizient α des elektrischen Widerstandes des Platins von bleibt erhalten, da eine Streuung von Leitungselektroden an Korngrenzen entfällt. Aufgrund der Möglichkeit, dünnere und damit längere Leiterbahnen auf einem Substrat auszubilden, können problemlos elektrische Widerstände von > 10kΩ für den Platindünnfilmwiderstand erreicht werden.

Es hat sich bewährt, wenn das einkristalline Substrat aus einem elektrisch isolierenden Material wie vorzugsweise α - Al₂O₃ oder MgO gebildet ist.
Diese Substrate sind für Epitaxieschichten aus Platin aus der Veröffentlichung _{"}Epitaxial Pt(001), Pt(110), and Pt(111) films on MgO(001), MgO(110), MgO(111), and Al₂O₃(0001)" von B.M. Lairson et al, Appl. Phys. Lett. 61 (12), 21 September 1992, Seiten 1390 bis 1392, bekannt. Diese beschreibt die Herstellung epitaktischer Platinschichten auf einkristallinen Substraten aus MgO oder Al₂O₃ und nennt unterschiedliche Herstellungsmethoden wie Molekularstrahlepitaxie, Laserablation, Kathodenzerstäubung oder chemische Dampfphasenabscheidung.

Insbesondere ist es bevorzugt, wenn das einkristalline Substrat aus α - Al₂O₃ gebildet ist, wobei die Oberfläche des Substrats parallel zur kristallographischen (110) - Ebene des α - Al₂O₃ ausgerichtet ist, und wenn das Platin des Platindünnfilmwiderstandes in der (111) - Ebene oder in der (110) - Ebene oder in der (100) - Ebene parallel zur Oberfläche aufgewachsen ist.

Vorteilhaft ist es aber auch, wenn das einkristalline Substrat aus α - Al₂O₃ gebildet ist, wobei die Oberfläche des Substrats parallel zur kristallographischen (001) - Ebene des α - Al₂O₃ ausgerichtet ist und dass das Platin des Platindünnfilmwiderstandes in der (111) - Ebene oder in der (110) - Ebene oder in der (100) - Ebene parallel zur Oberfläche aufgewachsen ist.

Bewährt hat sich außerdem, wenn das einkristalline Substrat aus α - Al₂O₃ gebildet ist, wobei die Oberfläche des Substrats parallel zur kristallographischen (1-10) - Ebene des α - Al₂O₃ ausgerichtet ist und wenn das Platin des Platindünnfilmwiderstandes in der (111) - Ebene oder in der (110) - Ebene oder in der (100) - Ebene parallel zur Oberfläche aufgewachsen ist.

Weiterhin hat es sich bewährt, wenn das einkristalline Substrat aus MgO gebildet ist, wobei die Oberfläche des Substrats parallel zur kristallographischen (111) - Ebene des MgO ist und wenn das Platin des Platindünnfilmwiderstandes in der (111) - Ebene oder in der (110) - Ebene oder in der (100) - Ebene parallel zur Oberfläche aufgewachsen ist.

Bewährt hat sich außerdem, wenn das einkristalline Substrat aus MgO ist, wobei die Oberfläche des Substrats parallel zur kristallographischen (001) - Ebene des MgO ist und wenn das Platin des Platindünnfilmwiderstandes in der (111) - Ebene oder in der (110) - Ebene oder in der (100) - Ebene parallel zur Oberfläche aufgewachsen ist.

Weiterhin hat es sich bewährt, wenn das einkristalline Substrat aus MgO ist, wobei die Oberfläche des Substrats parallel zur kristallographischen (110) - Ebene des MgO ist und wenn das Platin des Platindünnfilmwiderstandes in der (111) - Ebene oder in der (110) - Ebene oder in der (100) - Ebene parallel zur Oberfläche aufgewachsen ist.

Zwischen dem einkristallinen Substrat und dem Platindünnfilmwiderstand kann eine Keimschicht mit einer Dicke bis zu 2 nm angeordnet sein.

Das einkristalline Substrat kann auch aus einem elektrisch leitenden Material, beispielsweise Silizium, gebildet sein, wobei zwischen dem Substrat und dem Platindünnfilmwiderstand eine elektrisch isolierende Epitaxieschicht angeordnet ist.

Dabei hat es sich bewährt, wenn die Oberfläche des Substrats parallel zur kristallographischen (111) - Ebene des Silizium ausgebildet ist. Das Platin des Platindünnfilmwiderstandes ist dann vorzugsweise in der (111) - Ebene parallel zur Oberfläche aufgewachsen.

Zwischen dem elektrisch leitenden Substrat und der elektrisch isolierenden Epitaxieschicht und/oder zwischen der elektrisch isolierenden Epitaxieschicht und dem Platindünnfilmwiderstand kann eine Keimschicht mit einer Dicke bis zu 2 nm angeordnet sein.

Vorzugsweise ist der Platindünnfilmwiderstand aus Leiterbahnen gebildet, die eine Leiterbahnbreite im Bereich von 1 bis 10 µm aufweisen. Die Leiterbahnen beschreiben bevorzugt einen Mäander, wobei benachbarte Leiterbahnen in einem Abstand von 1 bis 10 µm zueinander angeordnet sind. Idealerweise weisen die Leiterbahnen eine Dicke im Bereich von 0,05µm bis 2 µm auf.

Die Leiterbahnen weisen bevorzugt einen Temperaturkoeffizienten α für den elektrischen Widerstand von größer als 0,00350 / K auf.

Das Problem wird für das Verfahren dadurch gelöst, dass die Epitaxieschicht(en) durch PVD ( Physical Vapour Deposition ) oder CVD ( Chemical Vapour Deposition ) oder MBE ( Molecular Beam Epitaxie ) abgeschieden wird/werden.

Eine Verwendung eines epitaktischen Platindünnfilms auf einem einkristallinen Substrat als Platindünnfilmwiderstand für einen Temperatursensor ist ideal.

Nachfolgende Ausführungsbeispiele 1 bis 3 sollen die Erfindung beispielhaft erläutern. Das äußere Erscheinungsbild eines Temperatursensors mit einem Platindünnfilmwiderstand ist bereits hinlänglich bekannt, beispielsweise aus der RU 2069324, so dass sich eine Figurendarstellung erübrigt.

### Beispiel 1:

Auf einem einkristallinen Substrat aus α - Al₂O₃, dessen Oberfläche parallel zur kristallographischen (110) - Ebene ausgerichtet ist, ist ein mäanderförmiger Platindünnfilmwiderstand durch Kathodenzerstäubung gebildet. Der Platindünnfilmwiderstand besteht aus einer Epitaxieschicht, die in der (110) - Ebene parallel zur Oberfläche des Substrats aufgewachsen ist und weist eine Dicke von 1µm auf. Die Leiterbahnen, aus welchen der mäanderförmige Platindünnfilmwiderstand gebildet ist, weisen eine Leiterbahnbreite sowie einen Abstand zueinander von jeweils 3µm auf.

### Beispiel 2:

Auf einem einkristallinen Substrat aus MgO, dessen Oberfläche parallel zur kristallographischen (001) - Ebene ausgerichtet ist, ist ein mäanderförmiger Platindünnfilmwiderstand durch CVD gebildet. Der Platindünnfilmwiderstand besteht aus einer Epitaxieschicht, die in der (110) - Ebene parallel zur Oberfläche des Substrats aufgewachsen ist und weist eine Dicke von 0,5µm auf. Die Leiterbahnen, aus welchen der mäanderförmige Platindünnfilmwiderstand gebildet ist, weisen eine Leiterbahnbreite von 5µm sowie einen Abstand zueinander von 1,5µm auf. Zwischen dem Substrat und Platindünnfilmwiderstand ist eine Keimschicht aus Fe in einer Dicke von 0,5nm angeordnet.

### Beispiel 3:

Auf einem einkristallinen Substrat aus Silizium, dessen Oberfläche parallel zur kristallographischen (111) - Ebene ausgerichtet ist, ist eine elektrisch isolierende Epitaxieschicht aus MgO, die in der (111) - Ebene parallel zur Oberfläche des Substrats aufgewachsen ist und eine Dicke von 2µm aufweist, durch Kathodenzerstäubung gebildet. Auf der elektrisch isolierenden Epitaxieschicht aus MgO ist ein mäanderförmiger Platindünnfilmwiderstand durch Kathodenzerstäubung gebildet. Der Platindünnfilmwiderstand besteht aus einer Epitaxieschicht, die in der (111) - Ebene parallel zur Oberfläche des Substrats aufgewachsen ist und weist eine Dicke von 1,5µm auf. Die Leiterbahnen, aus welchen der mäanderförmige Platindünnfilmwiderstand gebildet ist, weisen eine Leiterbahnbreite von 6µm sowie einen Abstand zueinander von 5µm auf.

## Patentansprüche

1. Temperatursensor mit einem temperatur-sensitiven Element auf einer Oberfläche eines einkristallinen Substrats, wobei das temperatur-sensitive Element durch einen Platindünnfilmwiderstand gebildet ist, **dadurch gekennzeichnet, dass** der Platindünnfilmwiderstand als Epitaxieschicht ausgebildet ist.

2. Temperatursensor nach Anspruch 1, **dadurch gekennzeichnet, dass** das einkristalline Substrat aus einem elektrisch isolierenden Material gebildet ist.

3. Temperatursensor nach Anspruch 2, **dadurch gekennzeichnet, dass** das einkristalline Substrat aus α - Al₂O₃ oder MgO gebildet ist.

4. Temperatursensor nach Anspruch 3, **dadurch gekennzeichnet, dass** das einkristalline Substrat aus α - Al₂O₃ gebildet ist, wobei die Oberfläche des Substrats parallel zur kristallographischen (110) - Ebene des α - Al₂O₃ ausgerichtet ist, und dass das Platin des Platindünnfilmwiderstandes in der (111) - Ebene oder in der (110) - Ebene oder in der (100) - Ebene parallel zur Oberfläche aufgewachsen ist.

5. Temperatursensor nach Anspruch 3, **dadurch gekennzeichnet, dass** das einkristalline Substrat aus α - Al₂O₃ ist, wobei die Oberfläche des Substrats parallel zur kristallographischen (001) - Ebene des α - Al₂O₃ ausgerichtet ist und dass das Platin des Platindünnfilmwiderstandes in der (111) - Ebene oder in der (110) - Ebene oder in der (100) - Ebene parallel zur Oberfläche aufgewachsen ist.

6. Temperatursensor nach Anspruch 3, **dadurch gekennzeichnet, dass** das einkristalline Substrat aus α - Al₂O₃ ist, wobei die Oberfläche des Substrats parallel zur kristallographischen (1-10) - Ebene des α - Al₂O₃ ausgerichtet ist und dass das Platin des Platindünnfilmwiderstandes in der (111) - Ebene oder in der (110) - Ebene oder in der (100) - Ebene parallel zur Oberfläche aufgewachsen ist.

7. Temperatursensor nach Anspruch 3, **dadurch gekennzeichnet, dass** das einkristalline Substrat aus MgO ist, wobei die Oberfläche des Substrats parallel zur kristallographischen (111) - Ebene des MgO ist und dass das Platin des Platindünnfilmwiderstandes in der (111) - Ebene oder in der (110) - Ebene oder in der (100) - Ebene parallel zur Oberfläche aufgewachsen ist.

8. Temperatursensor nach Anspruch 3, **dadurch gekennzeichnet, dass** das einkristalline Substrat aus MgO ist, wobei die Oberfläche des Substrats parallel zur kristallographischen (001) - Ebene des MgO ist und dass das Platin des Platindünnfilmwiderstandes in der (111) - Ebene oder in der (110) - Ebene oder in der (100) - Ebene parallel zur Oberfläche aufgewachsen ist.

9. Temperatursensor nach Anspruch 3, **dadurch gekennzeichnet, dass** das einkristalline Substrat aus MgO ist, wobei die Oberfläche des Substrats parallel zur kristallographischen (110) - Ebene des MgO ist und dass das Platin des Platindünnfilmwiderstandes in der (111) - Ebene oder in der (110) - Ebene oder in der (100) - Ebene parallel zur Oberfläche aufgewachsen ist.

10. Temperatursensor nach einem der Ansprüche 1 bis 9, **dadurch gekennzeichnet, dass** zwischen Substrat und Platindünnfilmwiderstand eine Keimschicht mit einer Dicke bis zu 2 nm angeordnet ist.

11. Temperatursensor nach Anspruch 1, **dadurch gekennzeichnet, dass** das einkristalline Substrat aus einem elektrisch leitenden Material gebildet ist und dass zwischen dem Substrat und dem Platindünnfilmwiderstand eine elektrisch isolierende Epitaxieschicht angeordnet ist.

12. Temperatursensor nach Anspruch 11, **dadurch gekennzeichnet, dass** das einkristalline Substrat aus Silizium ist.

13. Temperatursensor nach Anspruch 12, **dadurch gekennzeichnet, dass** die Oberfläche des Substrats parallel zur kristallographischen (111) - Ebene des Silizium ist.

14. Temperatursensor nach Anspruch 13, **dadurch gekennzeichnet, dass** das Platin des Platindünnfilmwiderstandes in der (111) - Ebene parallel zur Oberfläche aufgewachsen ist.

15. Temperatursensor nach einem der Ansprüche 11 bis 14, **dadurch gekennzeichnet, dass** zwischen Substrat und elektrisch isolierender Epitaxieschicht und/oder zwischen elektrisch isolierender Epitaxieschicht und Platindünnfilmwiderstand eine Keimschicht mit einer Dicke bis zu 2 nm angeordnet ist.

16. Temperatursensor nach einem der Ansprüche 1 bis 15, **dadurch gekennzeichnet, dass** der Platindünnfilmwiderstand aus Leiterbahnen gebildet ist, die eine Leiterbahnbreite im Bereich von 1 bis 10 µm aufweisen.

17. Temperatursensor nach Anspruch 16, **dadurch gekennzeichnet, dass** die Leiterbahnen einen Mäander beschreiben und benachbarte Leiterbahnen in einem Abstand von 1 bis 10 µm zueinander angeordnet sind.

18. Temperatursensor nach einem der Ansprüche 16 bis 17, **dadurch gekennzeichnet, dass** die Leiterbahnen eine Dicke im Bereich von 0,05 bis 2 µm aufweisen.

19. Temperatursensor nach Anspruch 18, **dadurch gekennzeichnet, dass** die Leiterbahnen einen Temperaturkoeffizienten α für den elektrischen Widerstand von größer als 0,00350 / K aufweisen.

20. Verfahren zur Herstellung eines Temperatursensors nach einem der Ansprüche 1 bis 19, **dadurch gekennzeichnet, dass** die Epitaxieschicht(en) durch PVD ( Physical Vapour Deposition ) oder CVD ( Chemical Vapour Deposition ) oder MBE ( Molecular Beam Epitaxie ) abgeschieden wird/werden.

21. Verwendung eines epitaktischen Platindünnfilms auf einem einkristallinen Substrat als Platindünnfilmwiderstand für einen Temperatursensor nach einem der Ansprüche 1 bis 19.

## Claims

1. Temperature sensor with a temperature sensitive element on a surface of a monocrystalline substrate, the temperature sensitive element being formed by a platinum thin-film resistor, **characterised in that** the platinum thin-film resistor is formed as an epitaxial layer.

2. Temperature sensor according to claim 1 **characterised in that** the monocrystalline substrate is formed of an electrically insulating material.

3. Temperature sensor according to claim 2 **characterised in that** the monocrystalline substrate is formed of α-Al₂O₃ or MgO.

4. Temperature sensor according to claim 3 **characterised in that** the monocrystalline substrate is formed of α-Al₂O₃, the surface of the substrate being oriented parallel to the crystallographic (110) plane of the α-Al₂O₃ and that the platinum of the platinum thin-film resistor has grown in the (111) plane or in the (110) plane or in the (100) plane parallel to the surface.

5. Temperature sensor according to claim 3 **characterised in that** the monocrystalline substrate consists of α-Al₂O₃, the surface of the substrate being oriented parallel to the crystallographic (001) plane of the α-Al₂O₃ and that the platinum of the platinum thin-film resistor has grown in the (111) plane or in the (110) plane or in the (100) plane parallel to the surface.

6. Temperature sensor according to claim 3 **characterised in that** the monocrystalline substrate consists of α-Al₂O₃, the surface of the substrate being oriented parallel to the crystallographic (1-10) plane of the α-Al₂O₃ and that the platinum of the platinum thin-film resistor has grown in the (111) plane or in the (110) plane or in the (100) plane parallel to the surface.

7. Temperature sensor according to claim 3 **characterised in that** the monocrystalline substrate consists of MgO, the surface of the substrate being oriented parallel to the crystallographic (111) plane of the MgO and that the platinum of the platinum thin-film resistor has grown in the (111) plane or in the (110) plane or in the (100) plane parallel to the surface.

8. Temperature sensor according to claim 3 **characterised in that** the monocrystalline substrate consists of MgO, the surface of the substrate being oriented parallel to the crystallographic (001) plane of the MgO and that the platinum of the platinum thin-film resistor has grown in the (111) plane or in the (110) plane or in the (100) plane parallel to the surface.

9. Temperature sensor according to claim 3 **characterised in that** the monocrystalline substrate consists of MgO, the surface of the substrate being oriented parallel to the crystallographic (110) plane of the MgO and that the platinum of the platinum thin-film resistor has grown in the (111) plane or in the (110) plane or in the (100) plane parallel to the surface.

10. Temperature sensor according to one of claims 1 to 9 **characterised in that** a seed layer with a thickness of up to 2 nm is arranged between the substrate and the platinum thin-film resistor.

11. Temperature sensor according to claim 1 **characterised in that** the monocrystalline substrate is formed of an electrically conductive material and that an electrically insulating epitaxial layer is arranged between the substrate and the platinum thin-film resistor.

12. Temperature sensor according to claim 11 **characterised in that** the monocrystalline substrate consists of silicon.

13. Temperature sensor according to claim 12 **characterised in that** the surface of the substrate is parallel to the crystallographic (111) plane of the silicon.

14. Temperature sensor according to claim 13 **characterised in that** the platinum of the platinum thin-film resistor has grown in the (111) plane parallel to the surface.

15. Temperature sensor according to one of claims 11 to 14 **characterised in that** a seed layer with a thickness of up to 2 µm is arranged between the substrate and the electrically insulating epitaxial layer and/or between the electrically insulating epitaxial layer and the platinum thin-film resistor.

16. Temperature sensor according to one of claims 1 to 15 **characterised in that** the platinum thin-film resistor is formed of conductor paths which have a conductor path width in the region of 1 to 10 µm.

17. Temperature sensor according to claim 16 **characterised in that** the conductor paths describe a meander and adjacent conductor paths are arranged at a distance of 1 to 10 µm from each other.

18. Temperature sensor according to one of claims 16 to 17 **characterised in that** the conductor paths have a thickness in the region of 0.05 to 2 µm.

19. Temperature sensor according to claim 18 **characterised in that** the conductor paths have a temperature coefficient α for the electrical resistance of more than 0.00350 / K.

20. Process for the production of a temperature sensor according to one of claims 1 to 19 **characterised in that** the epitaxial layer(s) is/are separated by PVD (physical vapour deposition) or CDV (chemical vapour deposition) or MBE (molecular beam epitaxy).

21. Use of an epitactic platinum thin film on a monocrystalline substrate as platinum thin-film resistor for a temperature sensor according to one of claims 1 to 19.

## Revendications

1. Capteur de température comportant un élément sensible à la température sur une surface d'un substrat monocristallin, dont lequel l'élément sensible à la température est formé par une résistance à couche mince de platine, **caractérisé en ce que** la résistance à couche mince de platine est réalisée sous la forme d'une couche épitaxiale.

2. Capteur de température selon la revendication 1, **caractérisé en ce que** le substrat monocristallin est réalisé à partir d'un matériau électriquement isolant.

3. Capteur de température selon la revendication 2, **caractérisé en ce que** le substrat monocristallin est réalisé à partir de α-Al₂O₃ ou MgO.

4. Capteur de température selon la revendication 3, **caractérisé en ce que** le substrat monocristallin est réalisé à partir de α-Al₂O₃, dans lequel la surface du substrat est orientée parallèlement au plan cristallographique (110) de α-Al₂O₃, et **en ce que** le platine de la résistance à couche mince de platine croît dans le plan (111) ou dans le plan (110) ou dans le plan (100) parallèlement à la surface.

5. Capteur de température selon la revendication 3, **caractérisé en ce que** le substrat monocristallin est réalisé à partir de α-Al₂O₃, dans lequel la surface du substrat est orientée parallèlement au plan cristallographique (001) de α-Al₂O₃ et **en ce que** le platine de la résistance à couche mince de platine croît dans le plan (111) ou dans le plan (110) ou dans le plan (100) parallèlement à la surface.

6. Capteur de température selon la revendication 3, **caractérisé en ce que** le substrat monocristallin est réalisé en α-Al₂O₃, dans lequel la surface du substrat est orientée parallèlement au plan cristallographique (110) de α-Al₂O₃ et **en ce que** le platine de la résistance à couche mince de platine croît dans le plan (111) ou dans le plan (110) ou dans le plan 100) parallèlement à la surface.

7. Capteur de température selon la revendication 3, **caractérisé en ce que** le substrat monocristallin est réalisé en MgO, dans lequel la surface du substrat est parallèle au plan cristallographique (111) et **en ce que** le platine de la résistance à couche mince de platine croît dans le plan (111) ou dans le plan (110) ou dans le plan (100) parallèlement à la surface.

8. Capteur de température selon la revendication 3, **caractérisé en ce que** le substrat monocristallin est réalisé en MgO, dans lequel la surface du substrat est parallèle au plan cristallographique (001) de MgO et **en ce que** le platine de la résistance à couche mince de platine croît dans le plan (111) ou dans le plan (110) ou dans le plan (100) parallèlement à la surface.

9. Capteur de température selon la revendication 3, **caractérisé en ce que** le substrat monocristallin est réalisé en MgO, dans lequel la surface du substrat est parallèle au plan cristallographique (110) de MgO et **en ce que** le platine de la résistance à couche mince de platine croît dans le plan (111) ou dans le plan (110) ou dans le plan (100) parallèlement à la surface.

10. Capteur de température selon l'une des revendications 1 à 9, **caractérisé en ce qu'**une couche d'ensemencement avec une épaisseur allant jusqu'à 2 nm est disposée entre le substrat et la résistance à couche mince de platine.

11. Capteur de température selon la revendication 1, **caractérisé en ce que** le substrat monocristallin est réalisé à partir d'un matériau électriquement conducteur et **en ce qu'**une couche épitaxiale électriquement isolante est disposée entre le substrat et la résistance à couche mince de platine.

12. Capteur de température selon la revendication 11, **caractérisé en ce que** le substrat monocristallin est réalisé en silicium.

13. Capteur de température selon la revendication 12, **caractérisé en ce que** la surface du substrat est parallèle au plan cristallographique (111) du silicium.

14. Capteur de température selon la revendication 13, **caractérisé en ce que** le platine de la résistance à couche mince de platine croît dans le plan (111) parallèlement à la surface.

15. Capteur de température selon l'une des revendications 11 à 14, **caractérisé en ce qu'**une couche d'ensemencement avec une épaisseur allant jusqu'à 2 nm est disposée entre le substrat et la couche épitaxiale électriquement isolante et/ou entre la couche épitaxiale électriquement isolante et la résistance à couche mince de platine.

16. Capteur de température selon l'une des revendications 1 à 15, **caractérisé en ce que** la résistance à couche mince de platine est réalisée sous la forme de pistes conductrices, qui présentent une largeur de piste conductrice allant de 1 à 10 µm.

17. Capteur de température selon la revendication 16, **caractérisé en ce que** les pistes conductrices décrivent un méandre et les pistes conductrices adjacentes sont disposées à une distance de 1 à 10 µm les unes par rapport aux autres.

18. Capteur de température selon l'une des revendications 16 à 17, **caractérisé en ce que** les pistes conductrices présentent une épaisseur allant de 0,05 à 2 µm.

19. Capteur de température selon la revendication 18, **caractérisé en ce que** les pistes conductrices présentent un coefficient de température α pour la résistance électrique supérieure à 0,00350/K.

20. Procédé de fabrication d'un capteur de température selon l'une des revendications 1 à 19, **caractérisé en ce que** la (les) couche(s) épitaxiale(s) est/sont déposée(s) par PVD (dépôt physique en phase vapeur) ou CVD (dépôt chimique en phase vapeur) ou MBE (épitaxie par faisceau moléculaire).

21. Utilisation d'une couche mince de platine épitactique sur un substrat monocristallin en tant que résistance à couche mince de platine pour un capteur de température selon l'une des revendications 1 à 19.
